(19) Europäisches Patentamt / European Patent Office / Office européen des brevets

(11) EP 4 708 404 A2

(12) EUROPEAN PATENT APPLICATION

(43) Date of publication: **11.03.2026 Bulletin 2026/11**

(21) Application number: **25217685.4**

(22) Date of filing: **21.11.2025**

(51) International Patent Classification (IPC): ***H01M 4/62*** *(2006.01)* ***H01M 10/0525*** *(2010.01)* ***H01M 10/0567*** *(2010.01)* ***H01M 10/0568*** *(2010.01)* ***H01M 10/0569*** *(2010.01)*

(52) Cooperative Patent Classification (CPC): **H01M 10/0567; H01M 4/622; H01M 10/0525; H01M 10/0568; H01M 10/0569;** H01M 2004/021; H01M 2300/0025; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **22.11.2024 CN 202411677261**

(71) Applicant: **Ningde Amperex Technology Limited**
**Ningde, Fujian 352100 (CN)**

(72) Inventor: **CHEN, Minjing**
**Ningde City, Fujian Province, 352100 (CN)**

(74) Representative: **Kraus & Lederer PartGmbB**
**Thomas-Wimmer-Ring 15**
**80539 München (DE)**

# (54) ELECTROLYTE, ELECTROCHEMICAL APPARATUS, AND ELECTRONIC APPARATUS

(57) An electrolyte includes lithium bis(fluorosulfonyl)imide, a sulfur-containing compound, and propyl propionate. Based on a mass of the electrolyte, a mass percentage of lithium bis(fluorosulfonyl)imide is A%, a mass percentage of the sulfur-containing compound is B%, and a mass percentage of propyl propionate is D%, where $0.3 \leq B/A \leq 4$, and $30 \leq D \leq 40$. With the above configuration, the risk of increased alternating current impedance of the electrochemical apparatus under high voltage can be reduced, and the drop resistance and intermittent cycling performance of the electrochemical apparatus can be improved.



Processed by Luminess, 75001 PARIS (FR)

## Description

### TECHNICAL FIELD

This application relates to the field of electrochemical technologies, and more particularly, to an electrolyte, an electrochemical apparatus, and an electronic apparatus.

### BACKGROUND

Electrochemical apparatuses (such as lithium-ion batteries) are widely used in fields such as smartphones, wearable devices, consumer drones, and electric vehicles due to their advantages of high energy density, long cycle life, and no memory effect. With the widespread application of lithium-ion batteries in the aforementioned fields, market demands for the safety performance and cycling performance of lithium-ion batteries have become increasingly stringent.

During cycling, lithium-ion batteries generate gas at high temperatures (>130°C), and the electrochemical interface (CEI) film on the surface of the positive electrode plate is susceptible to damage, adversely affecting the drop resistance and intermittent cycling performance of lithium-ion batteries.

### SUMMARY

The purpose of this application is to provide an electrolyte, an electrochemical apparatus, and an electronic apparatus to reduce the alternating current impedance of the electrochemical apparatus under high voltage, and to improve the drop resistance and intermittent cycling performance of the electrochemical apparatus.

It should be noted that in the summary of this application, a lithium-ion battery is used as an example of the electrochemical apparatus to illustrate this application, but the electrochemical apparatus of this application is not limited to lithium-ion batteries. The specific technical solutions are as follows.

A first aspect of this application provides an electrolyte including lithium bis(fluorosulfonyl)imide, a sulfur-containing compound, and propyl propionate, where based on a mass of the electrolyte, a mass percentage of lithium bis(fluorosulfonyl)imide is A%, and a mass percentage of the sulfur-containing compound is B%, where $0.3 \leq B/A \leq 4$; preferably, $2 \leq B/A \leq 3.5$; more preferably, $2.5 \leq B/A \leq 3$; and based on the mass of the electrolyte, a mass percentage of propyl propionate is D%, where $30 \leq D \leq 40$. When the electrolyte includes lithium bis(fluorosulfonyl)imide and the sulfur-containing compound, and the value of B/A falls within the range of this application, during the charge-discharge process of the electrochemical apparatus, especially in the initial few charge-discharge processes, the bis(fluorosulfonyl)imide anion ($FSI^-$ anion) and the sulfur-oxygen double bond in the electrolyte can form a structure with the highest occupied molecular orbital (high HOMO energy level) in the molecule. As a result, the structure exhibits stronger reducibility. During the charge-discharge process of the electrochemical apparatus, a uniform and stable electrochemical interface (CEI) film can be formed on the surface of the positive electrode plate. Moreover, this structure can suppress the generation of acidic gases at the interface and lower the risk of acidic gases corroding the positive electrode active material, thereby enhancing the chemical performance and structural stability of the positive electrode active material. This improves the drop resistance of the electrochemical apparatus, effectively lowers the risk of increased alternating current impedance under high voltage, and improves the intermittent cycling performance of the electrochemical apparatus. When an electrolyte including propyl propionate is used and the value of D is controlled within the above range, the risk of increased alternating current impedance under high-voltage conditions can be effectively lowered, and propyl propionate facilitates a more uniform distribution of $FSI^-$ anions, enabling the formation of a more uniform LiF-containing CEI film at the interface between the positive electrode plate and the electrolyte, thereby enhancing the drop resistance and intermittent cycling performance of the electrochemical apparatus.

In some embodiments of this application, $0.2 \leq A \leq 1.5$. In some embodiments of this application, $0.5 \leq B \leq 4$. In some embodiments of this application, $0.2 \leq A \leq 1.5$, and $0.5 \leq B \leq 4$. When the value of A and/or B is controlled within the above ranges, the viscosity of the electrolyte is moderate, promoting the formation of a stable and uniform CEI film during the charge-discharge process. This reduces the alternating current impedance of the electrochemical apparatus under high voltage, and improves the drop resistance and intermittent cycling performance of the electrochemical apparatus.

When an electrolyte including propyl propionate is used and the value of D is controlled within the above range, the risk of increased alternating current impedance under high-voltage conditions can be effectively lowered, and propyl propionate facilitates a more uniform distribution of $FSI^-$ anions, enabling the formation of a more uniform LiF-containing CEI film at the interface between the positive electrode plate and the electrolyte, thereby enhancing the drop resistance and intermittent cycling performance of the electrochemical apparatus.

In some embodiments of this application, $30.5 \leq A+D \leq 41$. When the value of A+D is controlled within the above range, lithium bis(fluorosulfonyl)imide and propyl propionate work synergistically, and propyl propionate enables a more uniform distribution of $FSI^-$ anions, promoting the formation of a more uniform LiF-containing CEI film at the interface between the positive electrode plate and the electrolyte. This improves the drop resistance of the electrochemical apparatus and effectively lowers the risk of increased alternating current impedance under high-voltage conditions, thereby enhancing the drop resistance and intermittent cycling performance of the electrochemical apparatus.

In some embodiments of this application, the sulfur-containing compound includes at least one of 1,3-propane sultone, 1-fluoro-1,3-propane sultone, 2-fluoro-1,3-propane sultone, 3-fluoro-1,3-propane sultone, 1-methyl-1,3-propane sultone, 2-methyl-1,3-propane sultone, 3-methyl-1,3-propane sultone, 1-propene-1,3-sultone, 2-propene-1,3-sultone, 1-fluoro-1-propene-1,3-sultone, 2-fluoro-1-propene-1,3-sultone, 3-fluoro-1-propene-1,3-sultone, 1-fluoro-2-propene-1,3-sultone, 2-fluoro-2-propene-1,3-sultone, 1-methyl-1-propene-1,3-sultone, 2-methyl-1-propene-1,3-sultone, 3-methyl-1-propene-1,3-sultone, 1-methyl-2-propene-1,3-sultone, 2-methyl-2-propene-1,3-sultone, 3-methyl-2-propene-1,3-sultone, 1,4-butane sultone, 1,5-pentane sultone, methylene methane disulfonate, ethylene methane disulfonate, sulfolane, methyl sulfolane, 4,5-dimethyl sulfolane, or sulfolene. In some embodiments of this application, the sulfur-containing compound includes at least one of 1,3-propane sultone or sulfolane. When sulfur-containing compounds within the above range are used, the structural stability of the interface between the positive electrode plate and the electrolyte can be improved, and the generated lithium-containing reduction products may be uniformly deposited on the negative electrode plate, improving the intermittent cycling performance of the electrochemical apparatus. In addition, the drop test pass rate of the electrochemical apparatus is effectively increased, thereby enhancing the drop resistance of the electrochemical apparatus.

In some embodiments of this application, the electrolyte further includes 3-bromo-5-chloro-1-phenylthiophene, where based on the mass of the electrolyte, a mass percentage of 3-bromo-5-chloro-1-phenylthiophene is C%, and $1.8 \leq C \leq 3.8$. When an electrolyte including 3-bromo-5-chloro-1-phenylthiophene is used and the value of C is controlled within the above range, the formation of a uniform and stable solid electrolyte interface (SEI) film structure is further promoted, improving the drop resistance of the electrochemical apparatus. In addition, gas generation in the electrochemical apparatus during temperature rise is reduced, improving the intermittent cycling performance of the electrochemical apparatus.

In some embodiments of this application, $2 \leq A+C \leq 4.8$. When the value of A+C is controlled within the above range, the formation of uniform and stable CEI and SEI films is promoted, improving the drop resistance of the electrochemical apparatus. In addition, gas generation in the electrochemical apparatus during temperature rise is reduced, further improving the intermittent cycling performance of the electrochemical apparatus.

A second aspect of this application provides an electrochemical apparatus, including a positive electrode plate, a negative electrode plate, a separator, and the electrolyte according to any of the foregoing embodiments. Therefore, the electrochemical apparatus of this application has low alternating current impedance under high voltage, and exhibits good drop resistance and intermittent cycling performance.

In some embodiments of this application, the positive electrode plate includes a positive electrode material layer, where the positive electrode material layer includes amorphous carbon. When a ball with a diameter of 15 mm and a weight of 12 g is dropped from a height of 0.1 m to 0.5 m onto the positive electrode material layer, a thickness change rate of the positive electrode material layer is 1% to 20%. When the positive electrode plate satisfies the above conditions, the positive electrode plate has good conductivity, and the positive electrode plate has mechanical strength and hardness compatible with the electrolyte of this application. The positive electrode plate and the electrolyte work synergistically to effectively improve the high-temperature puncture resistance, low-temperature cycling performance, and high-temperature cycling performance of the electrochemical apparatus, lowering the risk of increased alternating current impedance under high voltage, and improving the intermittent cycling performance and drop resistance of the electrochemical apparatus.

In some embodiments of this application, the positive electrode material layer includes a first compound, where the first compound includes at least one of polybutyl acrylate, polyethyl acrylate, polybutyl methacrylate, or polymethyl methacrylate, and based on a mass of the positive electrode material layer, a mass percentage of the first compound is 0.01% to 0.28%. When the first compound within the above range is used and the mass percentage of the first compound is controlled within the above range, the positive electrode plate has good wettability compatible with the electrolyte of this application. The positive electrode plate and the electrolyte work synergistically to effectively improve the high-temperature puncture resistance, low-temperature cycling performance, and high-temperature cycling performance of the electrochemical apparatus, lower the risk of increased alternating current impedance under high voltage, and improve the intermittent cycling performance, while the drop resistance of the electrochemical apparatus is also taken into account.

**In** some embodiments of this application, at 160°C, a thermal shrinkage rate of the separator in width direction after unfolding is F%, and a thickness of the positive electrode plate is T μm, where $0.04 \leq F/T \leq 0.1$. When the value of F/T is controlled within the above range, the separator and the positive electrode plate work synergistically, enabling the electrochemical apparatus to have better high-temperature cycling performance and structural stability and better high-temperature puncture resistance.

A third aspect of this application provides an electronic apparatus including the electrochemical apparatus according to any of the foregoing embodiments. Therefore, the electronic apparatus of this application has good performance.

**Beneficial effects of this application**

This application provides an electrolyte, an electrochemical apparatus, and an electronic apparatus, where the electrolyte includes lithium bis(fluorosulfonyl)imide, a sulfur-containing compound, and propyl propionate. Based on a mass of the electrolyte, a mass percentage of lithium bis(fluorosulfonyl)imide is A%, a mass percentage of the sulfur-containing compound is B%, and a mass percentage of propyl propionate is D%, where $0.3 \leq B/A \leq 4$, and $30 \leq D \leq 40$. With the above configuration, during the charge-discharge process of the electrochemical apparatus, especially in the initial few charge-discharge processes, the bis(fluorosulfonyl)imide anion and the sulfur-oxygen double bond in the electrolyte can form a structure with a high HOMO energy level, thus exhibiting stronger reducibility. During the charge-discharge process, a uniform and stable CEI film can be formed on the surface of the positive electrode plate. This structure can suppress the generation of acidic gases at the interface and lower the risk of acidic gases corroding the positive electrode active material. In addition, propyl propionate facilitates a more uniform distribution of $FSI^-$ anions, enabling the formation of a more uniform LiF-containing CEI film at the interface between the positive electrode plate and the electrolyte, thereby improving the chemical performance and structural stability of the positive electrode active material. This improves the drop resistance of the electrochemical apparatus, effectively lowering the risk of increased alternating current impedance under high voltage, and improving the intermittent cycling performance of the electrochemical apparatus.

Of course, any product or method implementing this application does not necessarily need to achieve all the advantages described above simultaneously.

**DESCRIPTION OF EMBODIMENTS**

The technical solutions in some embodiments of this application will be described clearly below. Obviously, the described embodiments are only a part of these embodiments of this application, not all of them. All other embodiments obtained by those skilled in the art based on these embodiments of this application fall within the scope of protection of this application.

It should be noted that in these embodiments of this application, a lithium-ion battery is used as an example of an electrochemical apparatus to illustrate this application, but the electrochemical apparatus of this application is not limited to lithium-ion batteries. The specific technical solutions are as follows:

A first aspect of this application provides an electrolyte including lithium bis(fluorosulfonyl)imide (LiFSI) and a sulfur-containing compound. Based on a mass of the electrolyte, a mass percentage of lithium bis(fluorosulfonyl)imide is A%, and a mass percentage of the sulfur-containing compound is B%, where $0.3 \leq B/A \leq 4$. For example, the value of B/A may be 0.3, 0.5, 0.8, 1, 1.2, 1.5, 1.8, 2, 2.2, 2.5, 2.8, 3, 3.2, 3.5, 3.8, 4, or a range defined by any two of these values. When the value of B/A is too large (exceeding the upper limit of this application), the viscosity of the electrolyte is high, and this is unfavorable for the thickness uniformity of the CEI film at the interface between the positive electrode plate and the electrolyte. Uneven CEI film thickness leads to inconsistent electrolyte flow rates, increasing side reactions in localized areas and generating byproducts from reactions between the electrolyte and part of the positive electrode active material, thereby affecting the drop resistance and intermittent cycling performance of the electrochemical apparatus. When the value of B/A is too small (below the lower limit of this application), the stability of the CEI film formed during the charge-discharge process is poor, and it is difficult to form a relatively uniform CEI film, leading to swelling and increased gas generation in the electrochemical apparatus. When the electrolyte includes lithium bis(fluorosulfonyl)imide and the sulfur-containing compound, and the value of B/A falls within the range of this application, during the charge-discharge process of the electrochemical apparatus, especially in the initial few charge-discharge processes, the bis(fluorosulfonyl)imide anion ($FSI^-$ anion) and the sulfur-oxygen double bond in the electrolyte can form a structure with the highest occupied molecular orbital (high HOMO energy level), thereby exhibiting stronger reducibility. During the charge-discharge process, a uniform and stable electrochemical interface (CEI) film can be formed on the surface of the positive electrode plate. Moreover, this structure can suppress the generation of acidic gases at the interface and lower the risk of acidic gases corroding the positive electrode active material, thereby enhancing the chemical performance and structural stability of the positive electrode active material, enhancing the mechanical performance of the positive electrode material layer. This improves the drop resistance of the electrochemical apparatus, effectively lowers the risk of increased alternating current impedance under high voltage (>4.45 V), and improves the intermittent cycling performance of the electrochemical apparatus.

In some embodiments of this application, $2 \leq B/A \leq 4$. For example, the value of B/A may be 2, 2.2, 2.5, 2.8, 3, 3.2, 3.5, 3.8, 4, or a range defined by any two of these values. When the electrolyte includes lithium bis(fluorosulfonyl)imide and the sulfur-containing compound, and the value of B/A falls within the range of this application, during the charge-discharge process of the electrochemical apparatus, especially in the initial few charge-discharge processes, the $FSI^-$ anion and the sulfur-oxygen double bond can form a structure with a high HOMO energy level, thus exhibiting stronger reducibility, which facilitates the formation of a uniform and stable CEI film. This structure can suppress the generation of acidic gases at the interface and lower the risk of acidic gases corroding the positive electrode active material, thereby improving the chemical performance and structural stability of the positive electrode material, enhancing the drop resistance of the electrochemical apparatus, effectively lowering the risk of increased alternating current impedance under high voltage, and improving the intermittent cycling performance of the electrochemical apparatus.

In some embodiments of this application, $2 \leq B/A \leq 3.5$. For example, the value of B/A may be 2, 2.2, 2.5, 2.8, 3, 3.2, 3.5, or a range defined by any two of these values. When the value of B/A is controlled within the above range, in the subsequent charge-discharge process after the initial few cycles, the CEI film formed by the $FSI^-$anion and the sulfur-oxygen double bond in the electrolyte can maintain a stable film structure during subsequent redox processes. This structure is more effective in suppressing the generation of acidic gases at the interface and further lowering the risk of acidic gases corroding the positive electrode active material, thereby improving the chemical stability of the positive electrode active material, reducing the alternating current impedance of the electrochemical apparatus under high voltage, and enhancing the drop resistance and intermittent cycling performance of the electrochemical apparatus.

In some embodiments of this application, $2.5 \leq B/A \leq 3$. For example, the value of B/A may be 2.5, 2.55, 2.6, 2.65, 2.7, 2.75, 2.8, 2.85, 2.9, 2.95, 3, or a range defined by any two of these values. When the value of B/A is controlled within the above range, during the charge-discharge process, the CEI film formed by the $FSI^-$anion and the sulfur-oxygen double bond in the electrolyte can further maintain a stable film structure during subsequent redox processes. This structure is more effective in suppressing the generation of acidic gases at the interface and further lowering the risk of acidic gases corroding the positive electrode active material, thereby improving the chemical stability of the positive electrode active material, reducing the alternating current impedance of the electrochemical apparatus under high voltage, and enhancing the drop resistance and intermittent cycling performance of the electrochemical apparatus.

In some embodiments of this application, $0.2 \leq A \leq 1.5$. For example, the value of A may be 0.2, 0.3, 0.4, 0.5, 0.6, 0.7, 0.8, 0.9, 1, 1.1, 1.2, 1.3, 1.4, 1.5, or a range defined by any two of these values. Lithium bis(fluorosulfonyl)imide has high structural stability. When the value of A is controlled within the above range, the viscosity of the electrolyte is moderate. This helps lower the risk that uneven CEI film thickness leads to inconsistent electrolyte flow rates, resulting in increased side reactions in localized areas of the positive electrode plate and increased byproducts from reactions between the electrolyte and part of the positive electrode active material. In addition, the risk of swelling and gas generation in the electrochemical apparatus during the charge-discharge process due to insufficient stability and unevenness of the formed CEI film is lowered. During the charge-discharge process, the formation of a stable and uniform CEI film is promoted. This structure can lower the risk of oxidative-reductive decomposition of the electrolyte during the charge-discharge reaction, suppress the generation of acidic gases, enhance the chemical stability of the positive electrode active material, reduce the alternating current impedance of the electrochemical apparatus under high voltage, and improve the drop resistance and intermittent cycling performance of the electrochemical apparatus.

In some embodiments of this application, $0.5 \leq B \leq 4$. For example, the value of B may be 0.5, 0.8, 1, 1.2, 1.5, 1.8, 2, 2.2, 2.5, 2.8, 3, 3.2, 3.5, 3.8, 4, or a range defined by any two of these values. The sulfur-containing compound has high structural stability. When the value of B is controlled within the above range, the viscosity of the electrolyte is moderate. This helps lower the risk that uneven CEI film thickness leads to inconsistent electrolyte flow rates, resulting in increased side reactions in localized areas of the positive electrode plate and increased byproducts from reactions between the electrolyte and part of the positive electrode active material. In addition, the risk of swelling and gas generation in the electrochemical apparatus during the charge-discharge process due to insufficient stability and unevenness of the formed CEI film is lowered. During the charge-discharge process, the formation of a stable and uniform CEI film is promoted. This structure can lower the risk of oxidative-reductive decomposition of the electrolyte during the charge-discharge reaction, suppress the generation of acidic gases, improve the chemical stability of the positive electrode active material, reduce the alternating current impedance of the electrochemical apparatus under high voltage, and improve the drop resistance and intermittent cycling performance of the electrochemical apparatus.

In some embodiments of this application, $0.2 \leq A \leq 1.5$, and $0.5 \leq B \leq 4$. For example, the value of A may be 0.2, 0.3, 0.4, 0.5, 0.6, 0.7, 0.8, 0.9, 1, 1.1, 1.2, 1.3, 1.4, 1.5, or a range defined by any two of these values; and the value of B may be 0.5, 0.8, 1, 1.2, 1.5, 1.8, 2, 2.2, 2.5, 2.8, 3, 3.2, 3.5, 3.8, 4, or a range defined by any two of these values. Both lithium bis(fluorosulfonyl)imide and the sulfur-containing compound have high structural stability. When the values of A and B are controlled within the above ranges, the viscosity of the electrolyte is moderate. This helps lower the risk that uneven CEI film thickness leads to inconsistent electrolyte flow rates, resulting in increased side reactions in localized areas of the positive electrode plate and increased byproducts from reactions between the electrolyte and part of the positive electrode active material. In addition, the risk of swelling and gas generation in the electrochemical apparatus during the charge-discharge process due to insufficient stability and unevenness of the formed CEI film is lowered. During the charge-discharge process, the formation of a stable and uniform CEI film is promoted. This structure can lower the risk of oxidative-reductive decomposition of the electrolyte during the charge-discharge reaction, suppress the generation of acidic gases, improve the chemical stability of the positive electrode active material, reduce the alternating current impedance of the electrochemical apparatus under high voltage, and improve the drop resistance and intermittent cycling performance of the electrochemical apparatus.

The electrolyte of the first aspect of this application further includes propyl propionate. Based on the mass of the electrolyte, the mass percentage of propyl propionate is D%, where $30 \leq D \leq 40$. For example, the value of D may be 30, 30.5, 31, 31.5, 32, 32.5, 33, 33.5, 34, 34.5, 35, 35.5, 36, 36.5, 37, 37.5, 38, 38.5, 39, 39.5, 40, or a range defined by any two of these values. When an electrolyte including propyl propionate is used and the value of D is controlled within the above range, the risk of increased alternating current impedance under high-voltage conditions can be effectively lowered, and propyl propionate facilitates a more uniform distribution of $FSI^-$ anions, enabling the formation of a more uniform LiF-containing CEI film at the interface between the positive electrode plate and the electrolyte. This structure has good high-voltage resistance, improves the chemical stability of the positive electrode active material, effectively suppresses the generation of acidic gases in the electrochemical apparatus during temperature rise, and improves the drop resistance and intermittent cycling performance of the electrochemical apparatus.

In some embodiments of this application, $30.5 \leq A+D \leq 41$. For example, the value of A+D may be 30.5, 31, 31.5, 32, 32.5, 33, 33.5, 34, 34.5, 35, 35.5, 36, 36.5, 37, 37.5, 38, 38.5, 39, 39.5, 40, 40.5, 41, or a range defined by any two of these values. When the value of A+D is controlled within the above range, lithium bis(fluorosulfonyl)imide and propyl propionate work synergistically, and propyl propionate enables a more uniform distribution of $FSI^-$ anions, facilitating the formation of a more uniform LiF-containing CEI film at the interface between the positive electrode plate and the electrolyte. This structure has good high-voltage resistance, effectively suppresses the generation of acidic gases in the electrochemical apparatus during temperature rise and lowers the risk of acidic gases corroding the positive electrode active material. This enhances the chemical performance and structural stability of the positive electrode active material, improves the drop resistance of the electrochemical apparatus, and effectively lowers the risk of increased alternating current impedance under high-voltage conditions, thereby enhancing the drop resistance and intermittent cycling performance of the electrochemical apparatus.

In some embodiments of this application, the sulfur-containing compound includes at least one of 1,3-propane sultone, 1-fluoro-1,3-propane sultone, 2-fluoro-1,3-propane sultone, 3-fluoro-1,3-propane sultone, 1-methyl-1,3-propane sultone, 2-methyl-1,3-propane sultone, 3-methyl-1,3-propane sultone, 1-propene-1,3-sultone, 2-propene-1,3-sultone, 1-fluoro-1-propene-1,3-sultone, 2-fluoro-1-propene-1,3-sultone, 3-fluoro-1-propene-1,3-sultone, 1-fluoro-2-propene-1,3-sultone, 2-fluoro-2-propene-1,3-sultone, 1-methyl-1-propene-1,3-sultone, 2-methyl-1-propene-1,3-sultone, 3-methyl-1-propene-1,3-sultone, 1-methyl-2-propene-1,3-sultone, 2-methyl-2-propene-1,3-sultone, 3-methyl-2-propene-1,3-sultone, 1,4-butane sultone, 1,5-pentane sultone, methylene methane disulfonate, ethylene methane disulfonate, sulfolane, methyl sulfolane, 4,5-dimethyl sulfolane, or sulfolene. In some embodiments of this application, the sulfur-containing compound includes at least one of 1,3-propane sultone or sulfolane.

When sulfur-containing compounds within the above range are used, the sulfur-containing compound has higher structural stability and helps lower the risk of hexafluorophosphate anion decomposition forming HF gas molecules, improving the structural stability of the interface between the positive electrode plate and the electrolyte. In addition, the generated lithium-containing reduction products may be uniformly deposited on the negative electrode plate, reducing the irreversible capacity in the electrochemical apparatus and improving the intermittent cycling performance of the electrochemical apparatus. Moreover, the drop test pass rate of the electrochemical apparatus is effectively increased, thereby enhancing the drop resistance of the electrochemical apparatus.

In some embodiments of this application, the electrolyte further includes 3-bromo-5-chloro-1-phenylthiophene, where based on the mass of the electrolyte, a mass percentage of 3-bromo-5-chloro-1-phenylthiophene is C%, where $1.8 \leq C \leq 3.8$. For example, the value of C may be 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, or a range defined by any two of these values. When an electrolyte including 3-bromo-5-chloro-1-phenylthiophene is used and the value of C is controlled within the above range, the formation of a uniform and stable solid electrolyte interface (SEI) film structure is further promoted, effectively increasing the drop test pass rate of the electrochemical apparatus and improving the drop resistance of the electrochemical apparatus. The generated lithium-containing reduction products may be uniformly deposited on the negative electrode plate, reducing the irreversible capacity in the electrochemical apparatus and reducing gas generation during temperature rise, thereby improving the intermittent cycling performance of the electrochemical apparatus.

In some embodiments of this application, $2 \leq A+C \leq 4.8$. For example, the value of A+C may be 2, 2.2, 2.5, 2.8, 3, 3.2, 3.5, 3.8, 4, 4.2, 4.5, 4.8, or a range defined by any two of these values. When the value of A+C is controlled within the above range, the formation of uniform and stable CEI and SEI films is further promoted, suppressing the generation of acidic gases at the interface between the positive electrode plate and the electrolyte, and lowering the risk of acidic gases corroding the positive electrode active material. This enhances the chemical performance and structural stability of the positive electrode active material, effectively increases the drop test pass rate of the electrochemical apparatus, thereby improving the drop resistance of the electrochemical apparatus, effectively lowering the risk of increased alternating current impedance under high voltage, and improving the intermittent cycling performance of the electrochemical apparatus. In addition, the generated lithium-containing reduction products may be uniformly deposited on the negative electrode plate, reducing the irreversible capacity in the electrochemical apparatus and reducing gas generation during temperature rise, further improving the intermittent cycling performance of the electrochemical apparatus.

In some other embodiments of this application, the electrolyte may further include at least one of ethylene sulfate (DTD) or vinylene carbonate (VC), and may further include at least one of fluoromethyl methyl carbonate, difluoromethyl methyl carbonate, trifluoromethyl methyl carbonate, trifluoroethyl methyl carbonate, or bis(trifluoroethyl) carbonate.

In some other embodiments of this application, in addition to LiFSI, the electrolyte further includes an ionizable lithium salt, where the ionizable lithium salt includes at least one of $LiPF_6$, $LiSbF_6$, $LiAsF_6$, $LiClO_4$, $LiN(C_2F_5SO_2)_2$, $CF_3SO_3Li$, $LiC(CF_3SO_2)_3$, or $LiC_4BO_8$. The concentration of the ionizable lithium salt in the electrolyte is not particularly limited, preferably 0.5 mol/L or higher, more preferably 0.8 mol/L or higher, and further preferably 1.0 mol/L or higher. In addition, the concentration is preferably 3 mol/L or lower, more preferably 2 mol/L or lower, and further preferably 1.7 mol/L or lower. When the concentration of the ionizable lithium salt is controlled within the above range, the number of mobile lithium ions in the electrolyte is high, and the viscosity of the electrolyte is moderate, resulting in low electrolyte impedance and a high lithium ion migration rate, thereby improving the performance of the electrochemical apparatus.

In some other embodiments of this application, the electrolyte further includes at least one of a fluoroether, fluorinated ethylene carbonate, or an ether solvent. In some embodiments of this application, the electrolyte may further include a non-aqueous solvent. The non-aqueous solvent may be a carbonate compound, a carboxylate compound, an ether compound, other organic solvents, or a combination thereof.

The carbonate compound may include, in addition to chain carbonate compounds, cyclic carbonate compounds, fluorinated carbonate compounds, or a combination thereof.

The chain carbonate compounds may include diethyl carbonate (DEC), ethyl propionate (EP), dimethyl carbonate (DMC), dipropyl carbonate (DPC), methyl propyl carbonate (MPC), ethyl propyl carbonate (EPC), methyl ethyl carbonate (MEC), or a combination thereof. Examples of the cyclic carbonate compounds include ethylene carbonate (EC), propylene carbonate (PC), butylene carbonate (BC), vinyl ethylene carbonate (VEC), or a combination thereof. Examples of the fluorinated carbonate compounds include fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene carbonate, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or a combination thereof.

Examples of the carboxylate compound include methyl acetate, ethyl acetate, n-propyl acetate, tert-butyl acetate, methyl propionate, ethyl propionate, $\gamma$-butyrolactone, decalactone, valerolactone, mevalonolactone, caprolactone, methyl formate, or a combination thereof.

Examples of the ether compound include dibutyl ether, tetraglyme, diglyme, 1,2-dimethoxyethane, 1,2-diethoxyethane, ethoxymethoxyethane, 2-methyltetrahydrofuran, tetrahydrofuran, or a combination thereof.

Examples of other organic solvents include dimethyl sulfoxide, 1,2-dioxolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate esters, or a combination thereof.

A second aspect of this application provides an electrochemical apparatus including a positive electrode plate, a negative electrode plate, a separator, and the electrolyte according to any of the foregoing embodiments. The positive electrode plate and the negative electrode plate are separated by the separator disposed therebetween. In some embodiments, the positive electrode plate includes a positive electrode current collector and a positive electrode material layer disposed on the positive electrode current collector, where the positive electrode material layer may include a positive electrode active material and a first compound. The negative electrode plate includes a negative electrode current collector and a negative electrode material layer disposed on the negative electrode current collector, where the negative electrode material layer may include a negative electrode active material. Therefore, the electrochemical apparatus of this application has low alternating current impedance under high voltage and exhibits good drop resistance and intermittent cycling performance.

In some embodiments of this application, the positive electrode plate includes a positive electrode material layer, where the positive electrode material layer includes amorphous carbon. When a ball with a diameter of 15 mm and a weight of 12 g is dropped from a height of 0.1 m to 0.5 m onto the positive electrode material layer, the thickness change rate of the positive electrode material layer is 1% to 20%. For example, the drop height of the ball may be 0.1 m, 0.15 m, 0.2 m, 0.25 m, 0.3 m, 0.35 m, 0.4 m, 0.45 m, 0.5 m, or a range defined by any two of these values; and the thickness change rate of the positive electrode material layer may be 1%, 3%, 5%, 8%, 10%, 12%, 15%, 18%, 20%, or a range defined by any two of these values. When the positive electrode plate satisfies the above conditions, the positive electrode plate has good conductivity, and the positive electrode plate has mechanical strength and hardness compatible with the electrolyte of this application. The positive electrode plate and the electrolyte work synergistically to effectively improve the high-temperature puncture resistance, low-temperature cycling performance, and high-temperature cycling performance of the electrochemical apparatus, lower the risk of increased alternating current impedance under high voltage, and improve the intermittent cycling performance and drop resistance of the electrochemical apparatus.

In some embodiments of this application, the positive electrode material layer includes a first compound, where the first compound includes at least one of polybutyl acrylate, polyethyl acrylate, polybutyl methacrylate, or polymethyl methacrylate, and based on a mass of the positive electrode material layer, a mass percentage of the first compound is 0.01% to 0.28%. For example, the mass percentage of the first compound may be 0.01%, 0.03%, 0.05%, 0.08%, 0.10%, 0.12%, 0.15%, 0.18%, 0.20%, 0.22%, 0.25%, 0.28%, or a range defined by any two of these values. When the first compound within the above range is used and the mass percentage of the first compound is controlled within the above range, the positive electrode plate has good wettability compatible with the electrolyte of this application. The positive electrode plate and the electrolyte work synergistically to effectively improve the high-temperature puncture resistance, low-temperature cycling performance, and high-temperature cycling performance of the electrochemical apparatus, lower the risk of increased alternating current impedance under high voltage, and improve the intermittent cycling performance, while the drop resistance of the electrochemical apparatus is also taken into account.

In some embodiments of this application, at 160°C, a thermal shrinkage rate of the separator in width direction after unfolding is F%, and a thickness of the positive electrode plate is T μm, where $0.04 \leq F/T \leq 0.1$. For example, the value of F/T may be 0.04, 0.05, 0.06, 0.07, 0.08, 0.09, 0.1, or a range defined by any two of these values. When the value of F/T is controlled within the above range, the separator and the positive electrode plate work synergistically, enabling the electrochemical apparatus to have better high-temperature cycling performance and structural stability and better high-temperature puncture resistance.

In this application, a thickness of the positive electrode plate is a sum of a thickness of the positive electrode current collector and a thickness of the positive electrode material layer. The thickness of the positive electrode material layer is controlled by means known to those skilled in the art. For example, when the positive electrode slurry is applied to the surface of the positive electrode current collector, with a fixed solid content of the positive electrode slurry, the thickness of the positive electrode material layer may be increased by increasing the coating weight per unit area of the positive electrode material layer, or decreased by reducing the coating weight per unit area of the positive electrode material layer. Under other constant conditions, the thickness of the positive electrode material layer may also be reduced by increasing the compaction density during cold pressing of the positive electrode plate, or increased by reducing the compaction density.

In some other embodiments of this application, $0.2 \leq F \leq 6$. For example, the value of F may be 0.2, 0.5, 0.8, 1, 1.2, 1.5, 1.8, 2, 2.2, 2.5, 2.8, 3, 3.2, 3.5, 3.8, 4, 4.2, 4.5, 4.8, 5, 5.2, 5.5, 5.8, 6, or a range defined by any two of these values. When the value of F is controlled within the above range, the separator has good thermal stability, enabling the electrochemical apparatus to have better high-temperature cycling performance and structural stability and better high-temperature puncture resistance.

In some embodiments, the negative electrode plate may include a negative electrode current collector and a negative electrode material layer disposed on the negative electrode current collector. The negative electrode material layer may be disposed on one or both sides of the negative electrode current collector. In some embodiments, the negative electrode current collector may include at least one of copper foil, nickel foil, or a carbon-based current collector. In some embodiments, a thickness of the negative electrode current collector may be 1 μm to 200 μm. In some embodiments, the negative electrode material layer may be coated only on a partial area of the negative electrode current collector. In some embodiments, a thickness of the negative electrode material layer may be 10 μm to 500 μm. It should be understood that these are merely exemplary, and other suitable thicknesses may be used.

In some embodiments, as described above, the negative electrode material layer includes a negative electrode active material. In some embodiments, the negative electrode active material includes at least one of natural graphite, artificial graphite, or a silicon-based material. In some embodiments, the silicon-based material includes at least one of silicon, a silicon-oxygen compound, a silicon-carbon compound, or a silicon alloy.

In some embodiments, the negative electrode material layer may further include a negative electrode conductive agent and/or a negative electrode binder. The negative electrode conductive agent may include at least one of carbon black, acetylene black, Ketjen black, graphene, carbon nanotubes, or carbon fibers. In some embodiments, the negative electrode binder may include at least one of carboxymethyl cellulose (CMC), polyacrylic acid, polyacrylate, polyacrylate ester, polyvinylpyrrolidone, polyimide, polysiloxane, or styrene-butadiene rubber. It should be understood that the materials disclosed above are merely exemplary, and the negative electrode active material layer may include any other suitable materials. In some embodiments, a mass ratio of the negative electrode active material, the negative electrode conductive agent, and the negative electrode binder in the negative electrode active material layer may be (80 to 99):(0.5 to 10):(0.5 to 10). It should be understood that this is merely exemplary and not intended to limit this application.

In some embodiments, the positive electrode plate includes a positive electrode current collector and a positive electrode material layer disposed on the positive electrode current collector. The positive electrode active material layer may be located on one or two sides of the positive electrode current collector. In some embodiments, the positive electrode current collector may include aluminum foil, or other positive electrode current collectors commonly used in the art. In some embodiments, a thickness of the positive electrode current collector may be 1 μm to 200 μm. In some embodiments, the positive electrode material layer may be coated only on a partial area of the positive electrode current collector. In some embodiments, a thickness of the positive electrode active material layer may be 20 μm to 490 μm, further preferably 20 μm to 400 μm, even further preferably 40 μm to 120 μm, and still further preferably 40 μm to 90 μm.

In some embodiments, as described above, the positive electrode active material layer includes a positive electrode active material. In some embodiments, the positive electrode active material may include at least one of lithium cobalt oxide, lithium manganese oxide, lithium iron phosphate, lithium manganese iron phosphate, lithium nickel cobalt manganese oxide, lithium nickel cobalt aluminum oxide, or lithium nickel manganese oxide, where the positive electrode active material may be doped and/or coated. Further preferably, the positive electrode active material is lithium cobalt oxide or lithium iron phosphate.

In some embodiments, at least a portion of a surface of the positive electrode material layer is provided with a coating layer, where the coating layer includes lithium phosphate and/or lithium niobate, with a mass ratio of the two substances being 1:3 to 1:1, and the thickness of the coating layer is 1 $\mu$m to 1.8 $\mu$m. With the above configuration, the positive electrode plate has better conductivity and makes the structure of the positive electrode active material more stable, and this facilitates improving the voltage drop and intermittent cycling performance of the electrochemical apparatus at high temperatures.

In some embodiments, the positive electrode plate further includes a first substance layer, where the first substance layer is located between the positive electrode material layer and the positive electrode current collector. The first substance layer includes lithium dihydrogen phosphate or aluminum dihydrogen phosphate, and based on a total mass of the first substance layer, a mass percentage of lithium dihydrogen phosphate or aluminum dihydrogen phosphate is W%, where $5 \leq W \leq 20$. With the above configuration, the positive electrode plate has better conductivity and makes the physicochemical structure of the positive electrode active material more stable, and this facilitates improving the voltage drop and intermittent cycling performance of the electrochemical apparatus at high temperatures.

In some embodiments, the positive electrode material layer further includes a positive electrode binder and a positive electrode conductive agent. In some embodiments, the positive electrode binder may include at least one of polyvinylidene fluoride, vinylidene fluoride-hexafluoropropylene copolymer, styrene-acrylate copolymer, styrene-butadiene copolymer, polyamide, polyacrylonitrile, polyacrylate, polyacrylic acid, polyacrylate salt, sodium carboxymethyl cellulose, polyvinyl acetate, polyvinylpyrrolidone, polyvinyl ether, polytetrafluoroethylene, or polyhexafluoropropylene. In some embodiments, the positive electrode conductive agent may include at least one of conductive carbon black, acetylene black, Ketjen black, graphene, carbon nanotubes, or carbon fibers.

In some embodiments, a substrate of the separator includes at least one of polyethylene, polypropylene, polyvinylidene fluoride, polyethylene terephthalate, polyimide, or aramid. For example, polyethylene includes at least one of high-density polyethylene, low-density polyethylene, or ultra-high molecular weight polyethylene. In particular, polyethylene and polypropylene are effective in preventing short circuits and can improve battery safety through a shutdown effect. In some embodiments, the overall thickness of the separator is in the range of about 3 $\mu$m to 480 $\mu$m.

In some embodiments, a surface of the separator may further include a porous layer, where the porous layer is disposed on at least one surface of the separator, and the porous layer includes inorganic particles and a binder. The inorganic particles are selected from at least one of aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), cerium dioxide ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, pores of the separator have a diameter in the range of about 0.01 $\mu$m to 1 $\mu$m. The binder of the porous layer is selected from at least one of polyvinylidene fluoride, vinylidene fluoride-hexafluoropropylene copolymer, polyamide, polyacrylonitrile, polyacrylate, polyacrylic acid, polyacrylate salt, sodium carboxymethyl cellulose, polyvinylpyrrolidone, polyvinyl ether, polytetrafluoroethylene, or polyhexafluoropropylene. The porous layer on the surface of the separator can enhance the heat resistance, oxidation resistance, and electrolyte wettability of the separator, and improve the adhesion between the separator and the electrode plates. One surface of the separator may further include a high-melting-point crystalline polymer or a high-temperature-resistant amorphous polymer, where the high-melting-point crystalline polymer includes at least one of polypropylene, poly(4-methyl-1-pentene), polytetrafluoroethylene, or polyvinylidene fluoride, and the high-temperature-resistant amorphous polymer includes a cyclic olefin copolymer. Based on a mass of the polyolefin porous substrate, a mass percentage of the high-temperature-resistant resin, z, is 2.5% to 9%. For example, the mass percentage of the high-temperature-resistant resin, z, may be 2.5%, 3%, 5%, 7%, 8%, 9%, or a range defined by any two of these values. When the high-temperature-resistant resin of the above type is added to the polyolefin porous substrate and the mass percentage of the high-temperature-resistant resin is controlled within the above range, the meltdown temperature of the separator is increased, improving the strength and high-temperature performance of the electrochemical apparatus.

In some embodiments, the electrochemical apparatus is a lithium-ion battery, but this application is not limited thereto.

In some embodiments of this application, taking a lithium-ion battery as an example, the positive electrode plate, separator, and negative electrode plate are wound or stacked in sequence to form an electrode assembly, then the electrode assembly is placed in a casing, such as an aluminum-plastic film, for encapsulation, and then the electrolyte is injected, followed by formation and encapsulation to produce the lithium-ion battery.

A third aspect of this application provides an electronic apparatus including the electrochemical apparatus according to any of the foregoing embodiments. Therefore, the electronic apparatus of this application has good performance.

The type of electronic apparatus in this application is not particularly limited and may be any electronic apparatus known in the prior art. In some embodiments, the electronic apparatus may include, but is not limited to, notebook computers, pen-input computers, mobile computers, e-book readers, portable phones, portable fax machines, portable copiers, portable printers, head-mounted stereo headphones, video recorders, LCD TVs, portable cleaners, portable CD players, mini-disc players, transceivers, electronic notebooks, calculators, memory cards, portable recorders, radios, backup power supplies, motors, automobiles, motorcycles, electric bicycles, bicycles, lighting fixtures, toys, gaming consoles, clocks, power tools, flashlights, cameras, large household batteries, and lithium-ion capacitors.

## Examples

The examples and comparative examples were provided to describe some embodiments of this application more specifically. Various tests and evaluations were conducted according to the methods described below. Unless otherwise specified, "parts" and "%" were based on mass.

### Test methods and devices

#### Capacity retention rate test for 300 intermittent cycles at 60°C

At 60°C, a lithium-ion battery was left standing for 30 minutes, charged at a constant current rate of 0.5C to 4.5 V, and then charged at a constant voltage of 4.5 V until the current reached 0.05C. Subsequently, the lithium-ion battery was left standing in a 60°C environment for 24 hours. The battery was then discharged at a constant current rate of 0.5C to 3.0 V, and the discharge capacity was recorded. This process constituted one complete intermittent charge-discharge cycle. The lithium-ion battery was subjected to 300 charge-discharge cycles in the same manner.

Capacity retention rate for 300 intermittent cycles at 60°C (%) = (Discharge capacity at the 300-th cycle / initial discharge capacity) $\times$ 100%.

A higher capacity retention rate for 300 intermittent cycles at 60°C indicated better intermittent cycling performance of the lithium-ion battery.

#### Alternating current impedance test for lithium-ion battery

At 25°C, an assembled lithium-ion battery was left standing for 12 hours. The electrochemical impedance spectrum (EIS) of the lithium-ion battery was measured using an electrochemical workstation, with a test frequency of 105 Hz and an amplitude of 10 mV. The battery was subjected to 300 charge-discharge cycles according to the charge-discharge procedure described in the "Capacity retention test for 300 intermittent cycles at 60°C." The impedance change rate was then calculated using the following formula:

Impedance change rate before and after 300 cycles (%) = [(Impedance after 300 cycles - Impedance before 300 cycles)/Impedance before 300 cycles] $\times$ 100%.

#### Drop test pass rate test

(1) Under an environmental condition of 25°C, the open-circuit voltage and internal resistance of the lithium-ion battery were recorded (test instrument: voltage and resistance tester, manufacturer: Dongguan Lijia Precision Instrument Co., Ltd., model: LNG-SY1-0020-DQ); (2) the lithium-ion battery was placed in a fixture chamber, and the fixture chamber containing the lithium-ion battery was dropped from a height of 1 m onto a cement floor using an automatic drop device for one cycle including three rounds of drops where in each round, the bottom surface, left side surface, right side surface, rear surface, front surface, and top surface of the fixture chamber landed on the floor respectively, for a total of 18 drops per cycle; (3) the procedure was repeated by dropping the fixture chamber from a height of 1.5 m onto the cement floor for one cycle including three rounds of drops where the bottom surface, left side surface, right side surface, rear surface, front surface, and top surface of the fixture chamber landed on the floor, for a total of 18 drops per cycle; (4) after each round of drops, the voltage of the lithium-ion battery was measured, and if the lithium-ion battery caught fire or leaked electrolyte, further drops were stopped; otherwise, drops were continued; and (5) the voltage and internal resistance of the lithium-ion battery were recorded, and if the voltage drop within 24 hours was less than 10 mV and the concentration of the VOC organic gas detected was less than 500 ppm, the lithium-ion battery was deemed to have passed the drop test.

For each example or comparative example, 50 lithium-ion batteries were prepared and tested. If X lithium-ion batteries passed the test, the drop test pass rate for that group was calculated as X/50 $\times$ 100%.

A higher drop test pass rate indicated better drop resistance of that group of lithium-ion batteries.

**Capacity retention rate test for 300 cycles at -20°C**

Each lithium-ion battery of the examples and comparative examples was repeatedly charged and discharged according to the following steps, and the discharge capacity retention rates were calculated.

In an environment of -20°C, the first charge and discharge were performed: the battery was charged at a constant current of 2C to a full charge voltage of 4.5 V, followed by constant-voltage charging at the maximum voltage of 4.5 V until the current reached 0.02C, and discharged at a constant current of 0.5C until the final voltage was 3.0 V. The discharge capacity of the first cycle was recorded. The above steps were repeated for 300 charge-discharge cycles, and the discharge capacity at the 300-th cycle was recorded.

Capacity retention rate for 300 cycles at -20°C = (Discharge capacity at the 300-th cycle/discharge capacity of first cycle) $\times$ 100%.

A higher capacity retention rate for 300 cycles at -20°C indicated better low-temperature cycling performance of the lithium-ion battery.

**Capacity retention rate test for 500 cycles at 45°C**

Each lithium-ion battery of the examples and comparative examples was repeatedly charged and discharged according to the following steps, and the discharge capacity retention rate was calculated.

In an environment of 45°C, the first charge and discharge were performed: the battery was charged at a constant current of 2C to a full charge voltage of 4.5 V, followed by constant-voltage charging at the maximum voltage until the current reached 0.02C, and discharged at a constant current of 0.5C until the final voltage was 3.0 V. The discharge capacity of the first cycle was recorded. The above steps were repeated for 500 charge-discharge cycles, and the discharge capacity at the 500-th cycle was recorded.

Capacity retention rate for 500 cycles at 45°C (%) = (Discharge capacity at the 500th cycle / discharge capacity of first cycle) $\times$ 100%.

A higher capacity retention rate for 500 cycles at 45°C indicated better high-temperature cycling performance of the lithium-ion battery.

**Puncture test at 40°C**

The lithium-ion battery under test was charged at a constant current rate of 0.05C to a designed full charge voltage of 4.5 V, then charged at the designed full charge voltage of 4.5 V until the current reached 0.025C, bringing the lithium-ion battery to a fully charged state. The appearance of the lithium-ion battery before testing was recorded. A nail penetration test was conducted on the lithium-ion battery in an environment of 25$\pm$3°C, with a steel nail diameter of 4 mm and a penetration speed of 30 mm/s. The penetration position was located at the geometric center of the lithium-ion battery. The test was conducted for 3.5 minutes or stopped when the surface temperature of the electrode assembly dropped to 50°C. With 10 lithium-ion batteries as a group, the states of the lithium-ion batteries during the test were observed. The criterion for passing the test was that the lithium-ion battery did not catch fire or explode.

A greater number of lithium-ion batteries passing the puncture test at 40°C indicated better high-temperature puncture resistance of the lithium-ion battery.

**Electrolyte composition test**

The composition of the electrolyte was measured using a gas chromatography-mass spectrometry (GC-MS) instrument (model: Agilent GC 7890A) in combination with an external standard method, and the mass percentage of each component in the electrolyte was measured separately.

**Thermal shrinkage rate test of separator in width direction after unfolding**

At an environmental temperature of 25°C, the lithium-ion batteries of each example and comparative example were discharged at 0.5C to 2.5 V and disassembled to remove the separator. The separator was soaked in dimethyl carbonate (DMC) for 20 minutes to remove residual electrolyte, then placed in an oven and dried at 60°C for 12 hours to obtain a separator sample.

The separator sample was cut into pieces measuring 5 cm × 5 cm. Then the separator pieces were laid flat on a glass plate, placed in a 200°C oven, and left standing for 2 hours. The degree of curling at the edges of the separator pieces was observed, and corresponding dimensions A cm × B cm were measured.

Thermal shrinkage rate of separator in width direction after unfolding, F%, = (5 - A) / 5 × 100%.

**Thickness change rate test of positive electrode material layer**

At an environmental temperature of 25°C, the lithium-ion batteries of each example and comparative example were discharged at 0.5C to 2.5 V and disassembled to remove the positive electrode plate. The positive electrode plate was soaked in dimethyl carbonate (DMC) for 20 minutes, then placed in an oven and dried at 60°C for 12 hours to obtain a test sample of the positive electrode plate.

From the center of the plane defined by the length and width directions of the unfolded positive electrode plate, a 3 cm × 3 cm positive electrode plate sample was taken. The thickness H1 of the positive electrode material layer of the 3 cm × 3 cm positive electrode plate sample was measured (by averaging three arbitrary measurement points). A ball with a diameter of 15 mm and a weight of 12 g was dropped from a height of 0.4 m onto the positive electrode material layer of the 3 cm × 3 cm positive electrode plate sample, ensuring the ball completely impacted the positive electrode material layer. The average thickness H2 of the positive electrode material layer after impact was measured at three points. Thickness change rate of positive electrode material layer (%) = H2 / H1 × 100%.

**Example 1-1**

<Preparation of positive electrode plate>

The positive electrode active material lithium cobalt oxide ($LiCoO_2$), conductive agent amorphous carbon, binder polyvinylidene fluoride (PVDF), and first compound polybutyl acrylate were mixed at a mass ratio of 96.75:1:2:0.25, followed by the addition of N-methylpyrrolidone (NMP) and stirring using a vacuum mixer until uniform, to obtain a positive electrode slurry with a solid content of 65 wt%. The positive electrode slurry was evenly coated on one surface of a 12 μm thick positive electrode current collector aluminum foil, and the aluminum foil was dried at 120°C for 1 hour to obtain a positive electrode plate coated with a positive electrode material layer on one side. The above steps were repeated on the other surface of the aluminum foil to obtain a positive electrode plate coated with the positive electrode material layer on two sides. After cold pressing, cutting, and tab welding, the positive electrode plate was dried at 120°C under vacuum for 1 hour to obtain a positive electrode plate with dimensions of 74 mm (width) × 867 mm (length), leaving an empty foil region at the tail of the current collector. The coating weight per unit area of the single-sided positive electrode material layer was 250 mg/1540.25 mm$^2$, and the thickness T of the positive electrode plate after cold pressing was 60 μm.

Aluminum oxide (Dv99 of 0.7 μm) and binder PVDF were mixed at a mass ratio of 80:20, followed by the addition of N-methylpyrrolidone (NMP) and stirring using a vacuum mixer until uniform, to obtain an inorganic coating slurry with a solid content of 30 wt%. The inorganic coating slurry was evenly coated on one surface (this surface was defined as surface a, while the other surface of the current collector was defined as surface b) of the positive electrode current collector aluminum foil at the tail of the positive electrode plate, and dried at 120°C for 1 hour to obtain a positive electrode plate with an inorganic coating on one surface, that is, surface a, of the current collector. The length of the inorganic coating was 95 mm, and the thickness of the inorganic coating was 2.5 μm.

<Preparation of negative electrode plate>

The negative electrode active material artificial graphite, conductive agent conductive carbon black, binder styrene-butadiene rubber (SBR), and thickener sodium carboxymethyl cellulose (CMC) were mixed at a weight ratio of 96.5:1.5:1:1, followed by the addition of deionized water and stirring using a vacuum mixer until uniform, to obtain a negative electrode slurry with a solid content of 75 wt%. The negative electrode slurry was evenly coated on one side of a negative electrode current collector copper foil, and dried at 120°C to obtain a negative electrode plate coated with a negative electrode material layer on one side. The above steps were repeated on the other side of the negative electrode current collector copper foil to obtain a negative electrode plate coated with the negative electrode material layer on two sides. After cold pressing, cutting, and slitting, a negative electrode plate with dimensions of 76 mm (width) × 874 mm (length) was obtained. The coating weight per unit area of the single-sided negative electrode material layer was 90 mg/1540.25 mm$^2$, and the thickness of the negative electrode plate after cold pressing was 70 μm.

<Preparation of electrolyte>

In a glove box filled with argon, ethylene carbonate (EC) was heated to 60°C to convert it to a liquid state. A base solvent was prepared with a mass ratio of EC (ethylene carbonate): DEC (diethyl carbonate): EMC (ethyl methyl carbonate): PC (propylene carbonate) = 1:1:1:1, added with solid lithium hexafluorophosphate to prepare a 1.15 mol/L lithium hexafluorophosphate solution using the constant volume method. Solid LiFSI, in an amount accounting for 1.0% of a total mass of the electrolyte, that is, A = 1, was added. Adiponitrile and 1,3,6-hexanetricarbonitrile were added, such that the mass content of adiponitrile accounted for 1% of the total mass of the electrolyte, and the mass content of 1,3,6-hexanetricarbonitrile accounted for 1.5% of the total mass of the electrolyte. 1,3-propane sultone, accounting for 2.0% of the total mass of the electrolyte, 3-bromo-5-chloro-1-phenylthiophene accounting for 1.8% of the total mass of the electrolyte, and propyl propionate, accounting for 30% of the total mass of the electrolyte, that is, B = 2, C = 1.8, D = 30, were added, with the remainder being the base solvent.

<Preparation of separator>

A 10 μm thick polyethylene (PE) microporous film was selected as the substrate of the separator.

Inorganic particles boehmite with Dv50 of 1.3 μm and polyacrylate were mixed at a mass ratio of 88:12 and dissolved in deionized water to form an inorganic coating slurry with a solid content of 43%. The obtained inorganic coating slurry was evenly coated on one side of the PE base film using a microgravure coating method to form a heat-resistant layer, and dried in an oven. The thickness of the inorganic coating was 1.8 μm.

Preparation of organic coating

Polypropylene (PP) particles of a first polymer, with propylene as the base monomer, were added into a mixer and stirred to uniformity, followed by the addition of sodium carboxymethyl cellulose and stirring to uniformity. The wetting agent dimethylsiloxane was added into the mixer, followed by the addition of deionized water and stirring, the slurry viscosity was adjusted to 45 mPa·s with the solid content of 6%, to obtain an organic coating slurry. The organic coating slurry was evenly coated on the inorganic coating on one side of the base film and dried in an oven to obtain a first coating. The thickness of the first coating was 3 μm. The mass ratio of the first polymer, sodium carboxymethyl cellulose, and dimethylsiloxane was 95:0.5:4.5. The polymer in the separator was spherical or near-spherical, with a sphericity R satisfying $0.7 \leq R \leq 1.0$.

Preparation of coating on the other side of the separator

Inorganic particles boehmite with Dv50 of 1.3 μm and polyacrylate were mixed at a mass ratio of 88:12 and dissolved in deionized water to form an inorganic coating slurry with a solid content of 47%. The obtained inorganic coating slurry was evenly coated on the other side of the PE base film using a microgravure coating method to form a heat-resistant layer, and dried in an oven. The thickness of the inorganic coating was 1.8 μm.

Inorganic particles boehmite and binder polyvinylidene fluoride were mixed at a volume ratio of 1.4, followed by the addition of N-methylpyrrolidone (first solvent) and stirring to uniformity to obtain a coating liquid with a solid content of 8%. The coating liquid was coated on a porous substrate (polyethylene) using a dip coating method to form a wet film. The porous substrate (polyethylene) with the wet film was immersed in a coagulation liquid containing deionized water (third solvent) and N-methylpyrrolidone (NMP, second solvent) for phase inversion, where the mass percentage of N-methylpyrrolidone (second solvent) in the coagulation liquid was 38%, and the temperature of the coating liquid and the coagulation liquid was 25°C. After immersion in the coagulation liquid for 30 seconds, the substrate was placed into an oven and dried at 60°C to obtain a separator with a porous film.

<Preparation of lithium-ion battery>

The positive electrode plate, separator, and negative electrode plate were stacked in sequence, with the separator positioned between the positive electrode plate and the negative electrode plate for separation, ensuring that the side of the separator coated with the organic coating faced surface a of the positive electrode current collector. The assembly was wound to obtain an electrode assembly. After tab welding, the electrode assembly was placed in an outer packaging of aluminum-plastic film and underwent dehydration at 80°C, then the above electrolyte was injected into the package. This was followed by processes such as vacuum encapsulation, standing, formation, shaping, and capacity testing to obtain a lithium-ion battery.

**Examples 1-2 to 1-10**

These examples were the same as Example 1-1 except that the relevant parameters were adjusted according to Table 1, where when the value of B in the electrolyte changed, the mass percentage of the base solvent was adjusted accordingly, while the proportions of the components in the base solvent remained unchanged, and the mass percentages of other substances besides the base solvent remained unchanged.

**Example 1-11**

This example was the same as Example 1-1 except that the relevant parameters were adjusted according to Table 1, where when the values of A and B in the electrolyte changed, the mass percentage of the base solvent changed accordingly, the proportions of the components in the base solvent remained unchanged, and the mass percentages of other substances besides the base solvent remained unchanged.

**Examples 1-12 to 1-16**

These examples were the same as Example 1-11 except that the relevant parameters were adjusted according to Table 1, where when the value of A in the electrolyte changed, the mass percentage of the base solvent changed accordingly, the proportions of the components in the base solvent remained unchanged, and the mass percentages of other substances besides the base solvent remained unchanged.

**Examples 1-17 to 1-20**

These examples were the same as Example 1-14 except that the relevant parameters were adjusted according to Table 1, where when the value of D in the electrolyte changed, the mass percentage of the base solvent changed accordingly, the proportions of the components in the base solvent remained unchanged, and the mass percentages of other substances besides the base solvent remained unchanged.

**Examples 1-21 to 1-25**

These examples were the same as Example 1-20 except that the relevant parameters were adjusted according to Table 1, where when the value of C in the electrolyte changed, the mass percentage of the base solvent changed accordingly, the proportions of the components in the base solvent remained unchanged, and the mass percentages of other substances besides the base solvent remained unchanged.

**Example 1-26**

This example was the same as Example 1-20 except that the relevant parameters were adjusted according to Table 1,where when the value of B in the electrolyte changed, the mass percentage of the base solvent changed accordingly, the proportions of the components in the base solvent remained unchanged, and the mass percentages of other substances besides the base solvent remained unchanged.

**Examples 1-27 to 1-28**

These examples were the same as Example 1-20 except that the relevant parameters were adjusted according to Table 1, where when the value of D in the electrolyte changed, the mass percentage of the base solvent changed accordingly, the proportions of the components in the base solvent remained unchanged, and the mass percentages of other substances besides the base solvent remained unchanged.

**Examples 1-29 to 1-30**

These examples were the same as Example 1-20 except that the relevant parameters were adjusted according to Table 1, where when the value of C in the electrolyte changed, the mass percentage of the base solvent changed accordingly, the proportions of the components in the base solvent remained unchanged, and the mass percentages of other substances besides the base solvent remained unchanged.

**Examples 1-31 to 1-36**

These examples were the same as Example 1-14 except that the relevant parameters were adjusted according to Table 1.

**Example 1-37**

This example was the same as Example 1-1 except that 3-bromo-5-chloro-1-phenylthiophene and propyl propionate was not added in the <Preparation of electrolyte> and that the relevant parameters were adjusted according to Table 1, where when 1,3-propane sultone and propyl propionate were not added to the electrolyte, the mass percentage of the base solvent changed accordingly, the proportions of the components in the base solvent remained unchanged, and the mass percentages of other substances besides the base solvent remained unchanged.

**Example 1-38**

This example was the same as Example 1-1 except that 3-bromo-5-chloro-1-phenylthiophene was not added in the <Preparation of electrolyte> and that the relevant parameters were adjusted according to Table 1, where when 1,3-propane sultone was not added to the electrolyte, the mass percentage of the base solvent changed accordingly, the proportions of the components in the base solvent remained unchanged, and the mass percentages of other substances besides the base solvent remained unchanged.

**Example 1-39**

This example was the same as Example 1-1 except that propyl propionate was not added in the <Preparation of electrolyte> and that the relevant parameters were adjusted according to Table 1, where when propyl propionate was not added to the electrolyte, the mass percentage of the base solvent changed accordingly, the proportions of the components in the base solvent remained unchanged, and the mass percentages of other substances besides the base solvent remained unchanged.

**Examples 2-1 to 2-22**

These examples were the same as Example 1-1 except that the relevant preparation parameters were adjusted according to Table 2, where when the thickness T of the positive electrode plate changed, the coating weight per unit area of the positive electrode material layer was adjusted to achieve the T value shown in Table 2; and when the mass percentage of the first compound changed, the mass ratio of the positive electrode active material to the first compound was adjusted to achieve the mass percentage of the first compound shown in Table 2.

**Example 3-1**

This example was the same as Example 1-1 except that the positive electrode plate was prepared according to the following steps.

<Preparation of positive electrode plate>

The positive electrode active material lithium cobalt oxide ($LiCoO_2$), conductive agent amorphous carbon, binder polyvinylidene fluoride (PVDF), and first compound polybutyl acrylate were mixed at a mass ratio of 96.75:1:2:0.25, followed by the addition of N-methylpyrrolidone (NMP) and stirring using a vacuum mixer until uniform, to obtain a positive electrode slurry with a solid content of 65 wt%. Lithium phosphate and lithium niobate were prepared at a mass ratio of 1:2 to obtain 2 kg of mixture, followed by the addition of 0.1 kg of conductive carbon and 10 kg of deionized water and stirring at 1300 rpm for 2.5 hours, to obtain a coating layer slurry with a solid content of 65 wt%. The positive electrode slurry was evenly coated on one surface of a 12 μm thick positive electrode current collector aluminum foil, and the aluminum foil was dried at 120°C for 1 hour to obtain a positive electrode plate coated with a positive electrode material layer on one side. The coating layer slurry was coated on the other surface of the positive electrode material layer away from the aluminum foil, and dried at 120°C for 1 hour to obtain a positive electrode plate coated with a positive electrode material layer and a coating layer on one side. The above steps were repeated on the other surface of the aluminum foil to obtain a positive electrode plate coated with the positive electrode material layer and the coating layer on two sides. After cold pressing, cutting, and tab welding, the positive electrode plate was dried at 120°C under vacuum for 1 hour to obtain a positive electrode plate with dimensions of 74 mm (width) × 867 mm (length), leaving an empty foil region at the tail of the current collector. The coating weight per unit area of the single-sided positive electrode material layer was 250 mg/1540.25 mm$^2$, the thickness T of the positive electrode plate excluding the coating layer after cold pressing was 60 μm, and the thickness of the single-sided coating layer was 1.5 μm.

Aluminum oxide (Dv99 of 0.7 μm) and binder PVDF were mixed at a mass ratio of 80:20, followed by the addition of N-methylpyrrolidone (NMP) and stirring using a vacuum mixer until uniform, to obtain an inorganic coating slurry with a solid content of 30 wt%. The inorganic coating slurry was evenly coated on one surface (this surface was defined as surface a, while the other surface of the current collector was defined as surface b) of the positive electrode current collector aluminum foil at the tail of the positive electrode plate, and dried at 120°C for 1 hour to obtain a positive electrode plate with an inorganic coating on one surface, that is, surface a, of the current collector. The length of the inorganic coating was 95 mm, and the thickness of the inorganic coating was 2.5 μm.

**Examples 3-2 to 3-3**

These examples were the same as Example 3-1 except that the relevant preparation parameters were adjusted according to Table 3.

**Example 3-4**

This example was the same as Example 1-1 except that the positive electrode plate was prepared according to the following steps.

<Preparation of positive electrode plate>

4.2545 kg of lithium dihydrogen phosphate, 3 kg of polyacrylic acid, 28 kg of boehmite, and 0.2 kg of conductive carbon were added to 60 kg of deionized water, following by stirring at 1300 rpm for 2.5 hours to obtain a first substance layer slurry with a solid content of 24 wt%. The positive electrode active material lithium cobalt oxide $LiCoO_2$, conductive agent amorphous carbon, binder polyvinylidene fluoride (PVDF), and first compound polybutyl acrylate were mixed at a mass ratio of 96.75:1:2:0.25, followed by the addition of N-methylpyrrolidone (NMP) and stirring using a vacuum mixer until uniform, to obtain a positive electrode slurry with a solid content of 65 wt%. The first substance layer slurry was coated on a 12 μm thick positive electrode current collector aluminum foil, and dried at 120°C to obtain a positive electrode current collector coated with the first substance layer on one side. The positive electrode slurry was coated on the other surface of the first substance layer away from the aluminum foil, and dried at 120°C for 1 hour to obtain a positive electrode plate coated with the positive electrode material layer and the first substance layer on one side. The above steps were repeated on the other surface of the aluminum foil to obtain a positive electrode plate coated with the positive electrode material layer and the first substance layer on two sides. After cold pressing, cutting, and tab welding, the positive electrode plate was dried at 120°C under vacuum for 1 hour to obtain a positive electrode plate with dimensions of 74 mm (width) × 867 mm (length), leaving an empty foil region at the tail of the current collector. The coating weight per unit area of the single-sided positive electrode material layer was 250 mg/1540.25 mm$^2$, the thickness T of the positive electrode plate excluding the first substance layer after cold pressing was 60 μm, and the thickness of the single-sided first substance layer was 1.5 μm. Based on a mass of the first substance layer, a mass percentage of lithium dihydrogen phosphate, W, was 12%.

Aluminum oxide (Dv99 of 0.7 μm) and binder PVDF were mixed at a mass ratio of 80:20, followed by the addition of N-methylpyrrolidone (NMP) and stirring using a vacuum mixer until uniform, to obtain an inorganic coating slurry with a solid content of 30 wt%. The inorganic coating slurry was evenly coated on one surface (surface was defined as surface a, while the other surface of the current collector was defined as surface b) of the positive electrode current collector aluminum foil at the tail of the positive electrode plate, and dried at 120°C for 1 hour to obtain a positive electrode plate with an inorganic coating on one surface, that is, surface a, of the current collector. The length of the inorganic coating was 95 mm, and the thickness of the inorganic coating was 2.5 μm.

**Examples 3-5 to 3-7**

These examples were the same as Example 3-4 except that the relevant preparation parameters were adjusted according to Table 3. When the mass percentage of lithium dihydrogen phosphate changed, an amount of lithium dihydrogen phosphate added was adjusted to achieve the W value shown in Table 3.

**Comparative Example 1**

This comparative example was the same as Example 1-20 except that 1,3-propane sultone, 3-bromo-5-chloro-1-phenylthiophene, and propyl propionate were not added in the <Preparation of electrolyte> and that the relevant parameters were adjusted according to Table 1, when 1,3-propane sultone, 3-bromo-5-chloro-1-phenylthiophene, and propyl propionate were not added to the electrolyte, the mass percentage of the base solvent changed accordingly, the proportions of the components in the base solvent remained unchanged, and the mass percentages of other substances besides the base solvent remained unchanged.

**Comparative Example 2**

This comparative example was the same as Example 1-20 except that lithium bis(fluorosulfonyl)imide, 3-bromo-5-chloro-1-phenylthiophene, and propyl propionate were not added in the <Preparation of electrolyte> and that the relevant parameters were adjusted according to Table 1, where when lithium bis(fluorosulfonyl)imide, 1,3-propane sultone, and propyl propionate were not added to the electrolyte, the mass percentage of the base solvent changed accordingly, the proportions of the components in the base solvent remained unchanged, and the mass percentages of other substances besides the base solvent remained unchanged.

**Comparative Example 3**

This comparative example was the same as Example 1-11 except that the relevant parameters were adjusted according to Table 1, where when the value of A in the electrolyte changed, the mass percentage of the base solvent changed accordingly, the proportions of the components in the base solvent remained unchanged, and the mass percentages of other substances besides the base solvent remained unchanged.

**Comparative Examples 4 and 5**

These comparative examples were the same as Example 1-20 except that the relevant parameters were adjusted according to Table 1, where when the value of B in the electrolyte changed, the mass percentage of the base solvent changed accordingly, the proportions of the components in the base solvent remained unchanged, and the mass percentages of other substances besides the base solvent remained unchanged.

The preparation parameters and performance parameters of each example and comparative example were shown in Tables 1 to 3.

**Table 1**

| | A | Type of sulfur-containing compound | B | D | C | B/A | A+D | A+C | Drop test pass rate (%) | Impedance change rate before and after 300 cycles (%) | Capacity retention rate for 300 intermittent cycles at 60°C (%) |
|---|---|---|---|---|---|---|---|---|---|---|---|
| Example 1-1 | 1.0 | 1,3-propane sultone | 2.0 | 30 | 1.8 | 2 | 31.0 | 2.8 | 85 | 21.00 | 82.10 |
| Example 1-2 | 1.0 | 1,3-propane sultone | 2.2 | 30 | 1.8 | 2.2 | 31.0 | 2.8 | 85 | 20.50 | 83.20 |
| Example 1-3 | 1.0 | 1,3-propane sultone | 2.4 | 30 | 1.8 | 2.4 | 31.0 | 2.8 | 85 | 20.30 | 83.50 |
| Example 1-4 | 1.0 | 1,3-propane sultone | 2.5 | 30 | 1.8 | 2.5 | 31.0 | 2.8 | 100 | 18.50 | 85.50 |
| Example 1-5 | 1.0 | 1,3-propane sultone | 2.8 | 30 | 1.8 | 2.8 | 31.0 | 2.8 | 100 | 17.60 | 86.40 |
| Example 1-6 | 1.0 | 1,3-propane sultone | 3.0 | 30 | 1.8 | 3 | 31.0 | 2.8 | 100 | 18.10 | 86.10 |

(continued)

| | A | Type of sulfur-containing compound | B | D | C | B/A | A+D | A+C | Drop test pass rate (%) | Impedance change rate before and after 300 cycles (%) | Capacity retention rate for 300 intermittent cycles at 60°C (%) |
|---|---|---|---|---|---|---|---|---|---|---|---|
| Example 1-7 | 1.0 | 1,3-propane sultone | 3.2 | 30 | 1.8 | 3.2 | 31.0 | 2.8 | 95 | 19.70 | 84.30 |
| Example 1-8 | 1.0 | 1,3-propane sultone | 3.5 | 30 | 1.8 | 3.5 | 31.0 | 2.8 | 95 | 20.50 | 82.60 |
| Example 1-9 | 1.0 | 1,3-propane sultone | 3.6 | 30 | 1.8 | 3.6 | 31.0 | 2.8 | 80 | 21.20 | 81.70 |
| Example 1-10 | 1.0 | 1,3-propane sultone | 4.0 | 30 | 1.8 | 4 | 31.0 | 2.8 | 80 | 21.80 | 81.40 |
| Example 1-11 | 0.2 | 1,3-propane sultone | 0.5 | 30 | 1.8 | 2.5 | 30.2 | 2.0 | 95 | 19.00 | 83.90 |
| Example 1-12 | 0.5 | 1,3-propane sultone | 0.5 | 30 | 1.8 | 1.0 | 30.5 | 2.3 | 85 | 21.90 | 81.80 |
| Example 1-13 | 0.8 | 1,3-propane sultone | 0.5 | 30 | 1.8 | 0.6 | 30.8 | 2.6 | 85 | 22.20 | 81.50 |
| Example 1-14 | 1.0 | 1,3-propane sultone | 0.5 | 30 | 1.8 | 0.5 | 31.0 | 2.8 | 85 | 22.60 | 81.10 |
| Example 1-15 | 1.2 | 1,3-propane sultone | 0.5 | 30 | 1.8 | 0.4 | 31.2 | 3.0 | 80 | 22.70 | 80.80 |
| Example 1-16 | 1.5 | 1,3-propane sultone | 0.5 | 30 | 1.8 | 0.3 | 31.5 | 3.3 | 80 | 23.00 | 80.60 |
| Example 1-17 | 1.0 | 1,3-propane sultone | 0.5 | 33 | 1.8 | 0.5 | 34.0 | 2.8 | 85 | 22.50 | 81.80 |
| Example 1-18 | 1.0 | 1,3-propane sultone | 0.5 | 35 | 1.8 | 0.5 | 36.0 | 2.8 | 90 | 22.30 | 82.10 |
| Example 1-19 | 1.0 | 1,3-propane sultone | 0.5 | 38 | 1.8 | 0.5 | 39.0 | 2.8 | 95 | 21.90 | 82.30 |
| Example 1-20 | 1.0 | 1,3-propane sultone | 0.5 | 40 | 1.8 | 0.5 | 41.0 | 2.8 | 95 | 21.50 | 82.70 |

(continued)

| | A | Type of sulfur-containing compound | B | D | C | B/A | A+D | A+C | Drop test pass rate (%) | Impedance change rate before and after 300 cycles (%) | Capacity retention rate for 300 intermittent cycles at 60°C (%) |
|---|---|---|---|---|---|---|---|---|---|---|---|
| Example 1-21 | 1.0 | 1,3-propane sultone | 0.5 | 40 | 2.2 | 0.5 | 41.0 | 3.2 | 85 | 21.20 | 83.00 |
| Example 1-22 | 1.0 | 1,3-propane sultone | 0.5 | 40 | 2.4 | 0.5 | 41.0 | 3.4 | 90 | 21.10 | 83.50 |
| Example 1-23 | 1.0 | 1,3-propane sultone | 0.5 | 40 | 2.8 | 0.5 | 41.0 | 3.8 | 90 | 20.90 | 83.60 |
| Example 1-24 | 1.0 | 1,3-propane sultone | 0.5 | 40 | 3.2 | 0.5 | 41.0 | 4.2 | 95 | 20.50 | 83.90 |
| Example 1-25 | 1.0 | 1,3-propane sultone | 0.5 | 40 | 3.8 | 0.5 | 41.0 | 4.8 | 95 | 20.20 | 84.30 |
| Example 1-26 | 1.0 | 1,3-propane sultone | 0.3 | 40 | 1.8 | 0.3 | 41.0 | 2.8 | 85 | 23.20 | 80.80 |
| Example 1-27 | 1.0 | 1,3-propane sultone | 0.5 | 43 | 1.8 | 0.5 | 44.0 | 2.8 | 80 | 23.70 | 80.10 |
| Example 1-28 | 1.0 | 1,3-propane sultone | 0.5 | 28 | 1.8 | 0.5 | 29.0 | 2.8 | 75 | 24.00 | 80.30 |
| Example 1-29 | 1.0 | 1,3-propane sultone | 0.5 | 40 | 1.5 | 2 | 41.0 | 2.5 | 85 | 24.10 | 81.50 |
| Example 1-30 | 1.0 | 1,3-propane sultone | 0.5 | 40 | 4.2 | 2 | 41.0 | 5.2 | 90 | 24.60 | 81.90 |
| Example 1-31 | 1.0 | Sulfolane | 0.5 | 30 | 1.8 | 0.5 | 31.0 | 2.8 | 90 | 22.90 | 81.00 |
| Example 1-32 | 1.0 | 1-fluoro-1,3-propane sultone | 0.5 | 30 | 1.8 | 0.5 | 31.0 | 2.8 | 80 | 23.30 | 80.00 |
| Example 1-33 | 1.0 | 2-fluoro-1,3-propane sultone | 0.5 | 30 | 1.8 | 0.5 | 31.0 | 2.8 | 80 | 23.40 | 80.30 |
| Example 1-34 | 1.0 | 3-fluoro-1,3-propane sultone | 0.5 | 30 | 1.8 | 0.5 | 31.0 | 2.8 | 80 | 23.50 | 80.50 |

(continued)

| | A | Type of sulfur-containing compound | B | D | C | B/A | A+D | A+C | Drop test pass rate (%) | Impedance change rate before and after 300 cycles (%) | Capacity retention rate for 300 intermittent cycles at 60°C (%) |
|---|---|---|---|---|---|---|---|---|---|---|---|
| Example 1-35 | 1.0 | Methyl sulfolane | 0.5 | 30 | 1.8 | 0.5 | 31.0 | 2.8 | 80 | 24.00 | 80.70 |
| Example 1-36 | 1.0 | 4,5-dimethyl sulfolane | 0.5 | 30 | 1.8 | 0.5 | 31.0 | 2.8 | 80 | 23.70 | 80.80 |
| Example 1-37 | 1.0 | 1,3-propane sultone | 2.0 | / | / | 2 | 1.0 | 1.0 | 75 | 22.50 | 80.20 |
| Example 1-38 | 1.0 | 1,3-propane sultone | 2.0 | 30 | / | 2 | 31.0 | 1.0 | 80 | 22.00 | 80.00 |
| Example 1-39 | 1.0 | 1,3-propane sultone | 2.0 | / | 1.8 | 2 | / | 2.8 | 85 | 21.50 | 81.00 |
| Comparative Example 1 | 1.0 | / | / | / | / | / | 1.0 | 1.0 | 55 | 28.00 | 74.50 |
| Comparative Example 2 | / | 1,3-propane sultone | 2.0 | / | / | / | / | / | 55 | 28.80 | 74.0 |
| Comparative Example 3 | 0.1 | 1,3-propane sultone | 0.5 | 30 | 1.8 | 5.0 | 30.1 | 1.9 | 55 | 27.80 | 77.30 |
| Comparative Example 4 | 1.0 | 1,3-propane sultone | 4.2 | 40 | 1.8 | 4.2 | 41.0 | 2.8 | 60 | 27.40 | 78.10 |
| Comparative Example 5 | 1.0 | 1,3-propane sultone | 0.2 | 40 | 1.8 | 0.2 | 41.0 | 2.8 | 55 | 27.50 | 75.00 |
| Note: The "/" in Table 1 indicates no relevant preparation parameters. | | | | | | | | | | | |

From Examples 1-1 to 1-39 and Comparative Examples 1 to 5, it can be seen that when the electrolyte includes lithium bis(fluorosulfonyl)imide and a sulfur-containing compound, and the value of B/A falls within the range of this application, the lithium-ion battery exhibits a lower impedance change rate before and after 300 cycles, and higher drop test pass rate and capacity retention rate for 300 intermittent cycles at 60°C. This indicates that the lithium-ion battery of this application is conducive to reducing alternating current impedance under high-voltage conditions, and has good drop resistance and intermittent cycling performance. In Comparative Example 1, the electrolyte contains no sulfur-containing compound; in Comparative Example 2, the electrolyte contains no lithium bis(fluorosulfonyl)imide; and in Comparative Examples 3 to 5, the value of B/A is outside the range of this application, so that in Comparative Examples 1 to 5, the lithium-ion battery exhibits a higher impedance change rate before and after 300 cycles, and lower drop test pass rate and capacity retention rate for 300 intermittent cycles at 60°C, indicating that the lithium-ion battery of this application is conducive to reducing alternating current impedance under high-voltage conditions, and has good drop resistance and intermittent cycling performance.

The value of A typically affects the alternating current impedance, drop resistance, and intermittent cycling performance of the lithium-ion battery under high-voltage conditions. From Examples 1-4 and 1-11 to 1-16, it can be seen that when the value of A falls within the range of this application, the lithium-ion battery exhibits a lower impedance change rate before and after 300 cycles, and higher drop test pass rate and capacity retention rate for 300 intermittent cycles at 60°C, indicating that the lithium-ion battery of this application is conducive to reducing alternating current impedance under high-voltage conditions, and has good drop resistance and intermittent cycling performance.

The value of B typically affects the alternating current impedance, drop resistance, and intermittent cycling performance of the lithium-ion battery under high-voltage conditions. From Examples 1-1 to 1-10 and 1-26, it can be seen that when the value of B falls within the range of this application, the lithium-ion battery exhibits a lower impedance change rate before and after 300 cycles, and higher drop test pass rate and capacity retention rate for 300 intermittent cycles at 60°C, indicating that the lithium-ion battery of this application is conducive to reducing alternating current impedance under high-voltage conditions, and has good drop resistance and intermittent cycling performance.

The value of D typically affects the alternating current impedance, drop resistance, and intermittent cycling performance of the lithium-ion battery under high-voltage conditions. From Examples 1-16 to 1-20, 1-27, 1-28, and 1-38, it can be seen that when the value of D falls within the range of this application, the lithium-ion battery exhibits a lower impedance change rate before and after 300 cycles, and higher drop test pass rate and capacity retention rate for 300 intermittent cycles at 60°C, indicating that the lithium-ion battery of this application is conducive to reducing alternating current impedance under high-voltage conditions, and has good drop resistance and intermittent cycling performance.

The value of A+D typically affects the alternating current impedance, drop resistance, and intermittent cycling performance of the lithium-ion battery under high-voltage conditions. From Examples 1-11 to 1-20, 1-27, 1-28, and 1-38, it can be seen that when the value of A+D falls within the range of this application, the lithium-ion battery exhibits a lower impedance change rate before and after 300 cycles, and higher drop test pass rate and capacity retention rate for 300 intermittent cycles at 60°C, indicating that the lithium-ion battery of this application is conducive to reducing alternating current impedance under high-voltage conditions, and has good drop resistance and intermittent cycling performance.

The value of C typically affects the alternating current impedance, drop resistance, and intermittent cycling performance of the lithium-ion battery under high-voltage conditions. From Examples 1-20 to 1-25, 1-29, 1-30, and 1-39, it can be seen that when the value of C falls within the range of this application, the lithium-ion battery exhibits a lower impedance change rate before and after 300 cycles, and higher drop test pass rate and capacity retention rate for 300 intermittent cycles at 60°C, indicating that the lithium-ion battery of this application is conducive to reducing alternating current impedance under high-voltage conditions, and has good drop resistance and intermittent cycling performance.

The value of A+C typically affects the alternating current impedance, drop resistance, and intermittent cycling performance of the lithium-ion battery under high-voltage conditions. From Examples 1-11 to 1-16, 1-21 to 1-30, and 1-39, it can be seen that when the value of A+C falls within the range of this application, the lithium-ion battery exhibits a lower impedance change rate before and after 300 cycles, and higher drop test pass rate and capacity retention rate for 300 intermittent cycles at 60°C, indicating that the lithium-ion battery of this application is conducive to reducing alternating current impedance under high-voltage conditions, and has good drop resistance and intermittent cycling performance.

The type of sulfur-containing compound typically affects the alternating current impedance, drop resistance, and intermittent cycling performance of the lithium-ion battery under high-voltage conditions. From Examples 1-14 and 1-31 to 1-36, it can be seen that when the type of sulfur-containing compound falls within the range of this application, the lithium-ion battery exhibits a lower impedance change rate before and after 300 cycles, and higher drop test pass rate and capacity retention rate for 300 intermittent cycles at 60°C, indicating that the lithium-ion battery of this application is conducive to reducing alternating current impedance under high-voltage conditions, and has good drop resistance and intermittent cycling performance.

Different combinations of electrolytes typically affect the alternating current impedance, drop resistance, and intermittent cycling performance of the lithium-ion battery under high-voltage conditions. From Examples 1-1 to 1-39, it can be seen that when the combination of the electrolyte falls within the range of this application, the lithium-ion battery exhibits a lower impedance change rate before and after 300 cycles, and higher drop test pass rate and capacity retention rate for 300 intermittent cycles at 60°C, indicating that the lithium-ion battery of this application is conducive to reducing alternating current impedance under high-voltage conditions, and has good drop resistance and intermittent cycling performance.

Table 2

|  | Thickness change rate of positive electrode material layer (%) | First compound | Mass percentage of first compound (%) | F (%) | T (μm) | F/T | Capacity retention rate for 300 cycles at -20°C (%) | Capacity retention rate for 500 cycles at 45°C (%) | Puncture test pass rate at 40°C | Drop test pass rate (%) | Impedance change rate before and after 300 cycles (%) | Capacity retention rate for 300 intermittent cycles at 60°C (%) |
|---|---|---|---|---|---|---|---|---|---|---|---|---|
| Example 1-1 | 20 | Polybutyl acrylate | 0.25 | 2.5 | 60.00 | 0.04 | 80.20 | 84.40 | 8/10 | 85 | 21.00 | 82.10 |
| Example 2-1 | 15 | Polybutyl acrylate | 0.25 | 2.5 | 62.50 | 0.04 | 81.30 | 85.10 | 8/10 | 85 | 20.50 | 82.50 |
| Example 2-2 | 10 | Polybutyl acrylate | 0.25 | 2.5 | 50.00 | 0.05 | 81.50 | 85.30 | 9/10 | 90 | 20.20 | 82.80 |
| Example 2-3 | 8 | Polybutyl acrylate | 0.25 | 2.5 | 41.67 | 0.06 | 82.50 | 85.60 | 9/10 | 90 | 19.50 | 83.10 |
| Example 2-4 | 5 | Polybutyl acrylate | 0.25 | 2.5 | 31.25 | 0.08 | 83.10 | 86.10 | 9/10 | 95 | 19.40 | 83.30 |
| Example 2-5 | 1 | Polybutyl acrylate | 0.25 | 2.5 | 25.00 | 0.10 | 83.50 | 86.40 | 10/10 | 100 | 19.10 | 83.80 |
| Example 2-6 | 3 | Polybutyl acrylate | 0.25 | 2.5 | 27.78 | 0.09 | 83.40 | 86.30 | 10/10 | 95 | 19.20 | 83.60 |
| Example 2-7 | 22 | Polybutyl acrylate | 0.25 | 2.5 | 166.67 | 0.02 | 79.40 | 83.50 | 8/10 | 80 | 21.90 | 81.80 |
| Example 2-8 | 26 | Polybutyl acrylate | 0.25 | 2.5 | 20.83 | 0.12 | 78.50 | 83.10 | 8/10 | 80 | 22.50 | 80.50 |
| Example 2-9 | 8 | Polybutyl acrylate | 0.22 | 2.5 | 41.67 | 0.06 | 82.90 | 85.80 | 9/10 | 85 | 19.20 | 83.40 |
| Example 2-10 | 8 | Polybutyl acrylate | 0.28 | 2.5 | 125.00 | 0.02 | 81.20 | 83.20 | 8/10 | 85 | 21.40 | 80.5 |
| Example 2-11 | 8 | Polybutyl acrylate | 0.20 | 2.5 | 62.50 | 0.04 | 82.10 | 85.50 | 9/10 | 85 | 20.60 | 83.00 |
| Example 2-12 | 8 | Polybutyl acrylate | 0.16 | 2.5 | 62.50 | 0.04 | 82.40 | 85.70 | 9/10 | 85 | 20.40 | 83.30 |

(continued)

| | Thickness change rate of positive electrode material layer (%) | First compound | Mass percentage of first compound (%) | F (%) | T (μm) | F/T | Capacity retention rate for 300 cycles at -20°C (%) | Capacity retention rate for 500 cycles at 45°C (%) | Puncture test pass rate at 40°C | Drop test pass rate (%) | Impedance change rate before and after 300 cycles (%) | Capacity retention rate for 300 intermittent cycles at 60°C (%) |
|---|---|---|---|---|---|---|---|---|---|---|---|---|
| Example 2-13 | 8 | Polybutyl acrylate | 0.11 | 2.5 | 62.50 | 0.04 | 83.10 | 85.90 | 9/10 | 80 | 20.10 | 83.60 |
| Example 2-14 | 8 | Polybutyl acrylate | 0.08 | 2.5 | 62.50 | 0.04 | 83.50 | 86.30 | 9/10 | 80 | 19.50 | 83.90 |
| Example 2-15 | 8 | Polybutyl acrylate | 0.05 | 2.5 | 62.50 | 0.04 | 84.10 | 86.70 | 10/10 | 80 | 19.20 | 84.40 |
| Example 2-16 | 8 | Polybutyl acrylate | 0.03 | 2.5 | 62.50 | 0.04 | 84.30 | 87.10 | 10/10 | 80 | 19.00 | 84.60 |
| Example 2-17 | 8 | Polybutyl acrylate | 0.01 | 2.5 | 62.50 | 0.04 | 84.60 | 87.20 | 10/10 | 80 | 18.70 | 84.80 |
| Example 2-18 | 8 | Polybutyl acrylate | 0.31 | 2.5 | 62.50 | 0.04 | 80.40 | 84.10 | 9/10 | 85 | 22.30 | 80.50 |
| Example 2-19 | 8 | Polymethyl methacrylate | 0.20 | 2.5 | 62.50 | 0.04 | 82.40 | 85.10 | 9/10 | 85 | 19.80 | 83.00 |
| Example 2-20 | 8 | Polybutyl acrylate | 0.25 | 5.5 | 137.50 | 0.04 | 81.50 | 86.70 | 9/10 | 95 | 21.80 | 83.80 |
| Example 2-21 | 8 | Polybutyl acrylate | 0.25 | 4 | 100.00 | 0.04 | 81.70 | 86.90 | 9/10 | 95 | 21.50 | 82.90 |
| Example 2-22 | 8 | Polybutyl acrylate | 0.25 | 6 | 150.00 | 0.04 | 81.10 | 86.10 | 9/10 | 100 | 22.50 | 82.60 |

The thickness change rate of the positive electrode material layer typically affects the low-temperature cycling performance, high-temperature cycling performance, high-temperature puncture resistance, alternating current impedance under high-voltage conditions, drop resistance, and intermittent cycling performance of the lithium-ion battery. From Examples 1-1 and 2-1 to 2-8, it can be seen that when the thickness change rate of the positive electrode material layer falls within the range of this application, the lithium-ion battery exhibits a lower impedance change rate before and after 300 cycles, higher capacity retention rates for 300 cycles at -20°C and 500 cycles at 45°C, and higher puncture test pass rate at 40°C, drop test pass rate, and capacity retention rate for 300 intermittent cycles at 60°C. This indicates that the lithium-ion battery of this application is conducive to reducing alternating current impedance under high-voltage conditions, and has good drop resistance, intermittent cycling performance, low-temperature cycling performance, high-temperature cycling performance, and high-temperature puncture resistance.

The value of F/T typically affects the low-temperature cycling performance, high-temperature cycling performance, high-temperature puncture resistance, alternating current impedance under high-voltage conditions, drop resistance, and intermittent cycling performance of the lithium-ion battery. From Examples 1-1, 2-1 to 2-10, and 2-20 to 2-22, it can be seen that when the value of F/T falls within the range of this application, the lithium-ion battery exhibits a lower impedance change rate before and after 300 cycles, higher capacity retention rates for 300 cycles at -20°C and 500 cycles at 45°C, and higher puncture test pass rate at 40°C, drop test pass rate, and capacity retention rate for 300 intermittent cycles at 60°C. This indicates that the lithium-ion battery of this application is conducive to reducing alternating current impedance under high-voltage conditions, and has good drop resistance, intermittent cycling performance, low-temperature cycling performance, high-temperature cycling performance, and high-temperature puncture resistance.

The mass percentage and type of the first compound typically affect the low-temperature cycling performance, high-temperature cycling performance, high-temperature puncture resistance, alternating current impedance under high-voltage conditions, drop resistance, and intermittent cycling performance of the lithium-ion battery. From Examples 1-1, 2-3, and 2-9 to 2-19, it can be seen that when the mass percentage and type of the first compound fall within the range of this application, the lithium-ion battery exhibits a lower impedance change rate before and after 300 cycles, higher capacity retention rates for 300 cycles at -20°C and 500 cycles at 45°C, and higher puncture test pass rate at 40°C, drop test pass rate, and capacity retention rate for 300 intermittent cycles at 60°C. This indicates that the lithium-ion battery of this application is conducive to reducing alternating current impedance under high-voltage conditions, and has good drop resistance, intermittent cycling performance, low-temperature cycling performance, high-temperature cycling performance, and high-temperature puncture resistance.

**Table 3**

| | Coating layer | Coating layer thickness (μm) | Coating layer substance | Lithium dihydrogen phosphate or aluminum dihydrogen phosphate | W (%) | Drop test pass rate (%) | Impedance change rate before and after 300 cycles (%) | Capacity retention rate for 300 intermittent cycles at 60°C (%) |
|---|---|---|---|---|---|---|---|---|
| Example 1-1 | / | / | / | / | / | 85 | 21.00 | 82.10 |
| Example 3-1 | Yes | 1.5 | Lithium phosphate: Lithium niobate = 1:2 | / | / | 100 | 19.80 | 83.00 |
| Example 3-2 | Yes | 1 | Lithium phosphate: Lithium niobate = 1:1 | / | / | 95 | 20.50 | 82.50 |
| Example 3-3 | Yes | 1.8 | Lithium phosphate: Lithium niobate = 1:3 | / | / | 100 | 19.50 | 83.50 |
| Example 3-4 | / | / | / | Lithium dihydrogen phosphate | 12 | 100 | 19.50 | 83.80 |

(continued)

| | Coating layer | Coating layer thickness (μm) | Coating layer substance | Lithium dihydrogen phosphate or aluminum dihydrogen phosphate | W (%) | Drop test pass rate (%) | Impedance change rate before and after 300 cycles (%) | Capacity retention rate for 300 intermittent cycles at 60°C (%) |
|---|---|---|---|---|---|---|---|---|
| Example 3-5 | / | / | / | Lithium dihydrogen phosphate | 5 | 95 | 20.70 | 83.50 |
| Example 3-6 | / | / | / | Lithium dihydrogen phosphate | 20 | 95 | 20.30 | 83.40 |
| Example 3-7 | / | / | / | Aluminum dihydrogen phosphate | 12 | 100 | 19.00 | 85.00 |
| Note: The "/" in Table 3 indicates no relevant preparation parameters. In Example 3-1, "Lithium phosphate: Lithium niobate = 1:2" refers to a mass ratio of lithium phosphate to lithium niobate of 1:2. Other examples are understood similarly. | | | | | | | | |

The coating layer on the surface of the positive electrode material layer typically affects the alternating current impedance, drop resistance, and intermittent cycling performance of the lithium-ion battery under high-voltage conditions. From Examples 1-1 and 3-1 to 3-3, it can be seen that when the parameters of the coating layer on the surface of the positive electrode material layer fall within the range of this application, the lithium-ion battery exhibits a lower impedance change rate before and after 300 cycles, and higher drop test pass rate and capacity retention rate for 300 intermittent cycles at 60°C. This indicates that the lithium-ion battery of this application is conducive to reducing alternating current impedance under high-voltage conditions, and has good drop resistance and intermittent cycling performance.

The content of lithium dihydrogen phosphate or aluminum dihydrogen phosphate in the positive electrode material layer typically affects the alternating current impedance, drop resistance, and intermittent cycling performance of the lithium-ion battery under high-voltage conditions. From Examples 1-1 and 3-4 to 3-7, it can be seen that when the value of W falls within the range of this application, the lithium-ion battery exhibits a lower impedance change rate before and after 300 cycles, and higher drop test pass rate and capacity retention rate for 300 intermittent cycles at 60°C. This indicates that the lithium-ion battery of this application is conducive to reducing alternating current impedance under high-voltage conditions, and has good drop resistance and intermittent cycling performance.

It should be noted that in this document, relational terms such as first and second are used solely to distinguish one entity or operation from another entity or operation, without necessarily requiring or implying any such actual relationship or order between these entities or operations. Moreover, the terms "comprise," "include," or any other variations thereof are intended to cover non-exclusive inclusion, such that a process, method, or article that includes a series of elements includes not only those elements but also other elements not expressly listed, or elements inherent to such process, method, or article.

The various embodiments in this specification are described in a related manner, with identical or similar parts among these embodiments referring to each other, and each embodiment focuses on the differences from other embodiments.

The above descriptions are merely preferred embodiments of this application and are not intended to limit this application. Any modifications, equivalent substitutions, improvements, etc., made within the spirit and principles of this application shall be included in the scope of protection of this application.

## Claims

1. An electrolyte comprising lithium bis(fluorosulfonyl)imide, a sulfur-containing compound, and propyl propionate; **characterized in that**, based on a mass of the electrolyte, a mass percentage of lithium bis(fluorosulfonyl)imide is A%, a mass percentage of the sulfur-containing compound is B%, and a mass percentage of propyl propionate is D%, wherein $0.3 \leq B/A \leq 4$, and $30 \leq D \leq 40$.

**2.** The electrolyte according to claim 1, wherein $2 \leq B/A \leq 3.5$.

**3.** The electrolyte according to claim 1, wherein $2.5 \leq B/A \leq 3$.

**4.** The electrolyte according to claim 1, wherein the electrolyte satisfies at least one of the following features:

(1)

$$0.2 \leq A \leq 1.5;$$

or
(2)

$$0.5 \leq B \leq 4.$$

**5.** The electrolyte according to claim 1, wherein $30.5 \leq A+D \leq 41$.

**6.** The electrolyte according to claim 1, wherein the sulfur-containing compound comprises at least one of 1,3-propane sultone, 1-fluoro-1,3-propane sultone, 2-fluoro-1,3-propane sultone, 3-fluoro-1,3-propane sultone, 1-methyl-1,3-propane sultone, 2-methyl-1,3-propane sultone, 3-methyl-1,3-propane sultone, 1-propene-1,3-sultone, 2-propene-1,3-sultone, 1-fluoro-1-propene-1,3-sultone, 2-fluoro-1-propene-1,3-sultone, 3-fluoro-1-propene-1,3-sultone, 1-fluoro-2-propene-1,3-sultone, 2-fluoro-2-propene-1,3-sultone, 1-methyl-1-propene-1,3-sultone, 2-methyl-1-propene-1,3-sultone, 3-methyl-1-propene-1,3-sultone, 1-methyl-2-propene-1,3-sultone, 2-methyl-2-propene-1,3-sultone, 3-methyl-2-propene-1,3-sultone, 1,4-butane sultone, 1,5-pentane sultone, methylene methane disulfonate, ethylene methane disulfonate, sulfolane, methyl sulfolane, 4,5-dimethyl sulfolane, or sulfolene.

**7.** The electrolyte according to claim 1, wherein the sulfur-containing compound comprises at least one of 1,3-propane sultone or sulfolane.

**8.** The electrolyte according to claim 1, wherein the electrolyte further comprises 3-bromo-5-chloro-1-phenylthiophene, wherein based on the mass of the electrolyte, a mass percentage of 3-bromo-5-chloro-1-phenylthiophene is C%, and $1.8 \leq C \leq 3.8$.

**9.** The electrolyte according to claim 8, wherein $2 \leq A+C \leq 4.8$.

**10.** An electrochemical apparatus comprising a positive electrode plate, a negative electrode plate, a separator, and the electrolyte according to any one of claims 1 to 9.

**11.** The electrochemical apparatus according to claim 10, wherein the positive electrode plate comprises a positive electrode material layer, the positive electrode material layer comprising amorphous carbon; wherein when a ball with a diameter of 15 mm and a weight of 12 g is dropped from a height of 0.1 m to 0.5 m onto the positive electrode material layer, a thickness change rate of the positive electrode material layer is 1% to 20%.

**12.** The electrochemical apparatus according to claim 11, wherein the positive electrode material layer comprises a first compound, the first compound comprising at least one of polybutyl acrylate, polyethyl acrylate, polybutyl methacrylate, or polymethyl methacrylate, wherein based on a mass of the positive electrode material layer, a mass percentage of the first compound is 0.01% to 0.28%.

**13.** The electrochemical apparatus according to claim 10, wherein at 160°C, a thermal shrinkage rate of the separator in width direction after unfolding is F%, and a thickness of the positive electrode plate is T μm, wherein $0.04 \leq F/T \leq 0.1$.

**14.** An electronic apparatus comprising the electrochemical apparatus according to any one of claims 10 to 13.